# NEUE EUROPÄISCHE PATENTSCHRIFT

(11) **EP 1 131 236 B2**
(45) Veröffentlichungstag und Bekanntmachung des Hinweises auf die Entscheidung über den Einspruch: **27.10.2010**
(45) Hinweis auf die Patenterteilung: 22.09.2004
(21) Anmeldenummer: 00960349.9
(22) Anmeldetag: 11.08.2000
(51) Int. Cl.: B62B 3/14

(54) **EINKAUFSWAGEN**
SHOPPING TROLLEY
CHARIOT POUR MAGASINS

(30) Priorität: 16.09.1999 DE 29916347 U; 28.09.1999 DE 29917050 U; 30.11.1999 DE 29920857 U; 16.02.2000 DE 10006999; 19.02.2000 DE 10007767
(43) Veröffentlichungstag der Anmeldung: 12.09.2001
(73) Patentinhaber: WANZL METALLWARENFABRIK GMBH, D-89336 Leipheim (DE)
(72) Erfinder: EBERLEIN, Herbert, 89347 Bubesheim (DE); BOXLER, Oliver, 87719 Mindelheim (DE)
(74) Vertreter: Ernicke, Hans-Dieter
(86) Internationale Anmeldenummer: PCT/DE2000/002737
(87) Internationale Veröffentlichungsnummer: WO 2001/019660

(56) Entgegenhaltungen:
- EP-A- 1 029 767
- DE-A- 4 337 917
- DE-A- 19 854 515
- US-A- 4 805 935
- US-A- 5 330 210
- US-A1- 5 435 582
- US-A1- 6 126 181

## Beschreibung

Die Erfindung betrifft einen Einkaufswagen mit einem Fahrgestell, mit einer Schiebeeinrichtung und mit einem Korb, der auf Stützen ruht, die an den Längsseiten des Einkaufswagens gelegen nach oben gerichtet sind, sowie mit einer vor dem Korb angeordneten, für ein Kind bestimmten Sitzeinrichtung, die in eine das Spielbedürfnis des Kindes ansprechende Aufnahmeeinrichtung eingebunden ist, wobei der Einkaufswagen nach hinten eine Öffnung aufweist, die sich zwischen dem Korb, dem Fußboden und den Stützen befindet.

Die Anmelderin stellt einen Einkaufswagen gemäß dem Oberbegriff des Anspruchs 1 her, der eine vor dem Korb angeordnete Sitzeinrichtung für ein Kind aufweist. Die Sitzeinrichtung ist Bestandteil einer Aufnahmeeinrichtung, die, auf das Spielbedürfnis von Kindem abzielend, als Kleinmobil gestaltet ist. Der Einkaufswagen weist in seinem hinteren Bereich eine Öffnung auf. Derartige Einkaufswagen sind im Prospekt Nr. 480/99 der Anmelderin aufgeführt. Solche Einkaufswagen lassen sich nicht in gleiche Einkaufswagen platzsparend einschieben.

In der DE 43 37 917 A1 ist ein Einkaufswagen beschrieben, bei dem vor dem Korb eine für ein Kind bestimmte hockerartige Sitzeinrichtung vorgesehen ist, die vom Fahrgestell des Einkaufswagens getragen wird. Der so gestaltete Einkaufswagen lässt sich in einen gleichen Einkaufswagen platzsparend einschieben, wie dies von üblichen Einkaufswagen her bekannt ist. Eine die Sitzeinrichtung aufnehmende, das Spielbedürfnis von Kindern anregende Aufnahmeeinrichtung ist jedoch bei diesem Einkaufswagen nicht vorhanden.

Es ist Aufgabe der Erfindung, einen Einkaufswagen der hier vorliegenden Art so weiterzuentwickeln, dass dieser sich in einen gleichen Einkaufswagen platzsparend einschieben lässt.

Die Lösung der Aufgabe ist gekennzeichnet durch die Merkmale von Anspruch 1.

Die vorgeschlagene Lösung lässt einen Einkaufswagen entstehen, der, obwohl er eine größer als die Sitzeinrichtung gestaltete Aufnahmeeinrichtung aufweist, trotzdem platzsparend in gleiche Einkaufswagen einschiebbar ist. Dies erweist sich als großer Vorteil, da nunmehr auf gleicher Stellfläche mehr Einkaufswagen abstellbar sind als dies bisher möglich war.

Nun ist wohl durch die US 4,805,935 ein Einkaufswagen bekannt, bei dem unterhalb des Korbes eine mit Haltegriffen ausgestattete Sitzplatte angeordnet ist. Ein Kind kann auf dieser Sitzplatte Platz nehmen. Derart gestaltete Einkaufswagen lassen sich wohl platzsparend ineinanderschieben, doch ist die als Sitzeinrichtung gestaltete Sitzplatte nicht vor dem Korb, sondern direkt unter dem Korb angeordnet. Auch ist die Sitzplatte nicht in eine Aufnahmeeinrichtung eingebunden, die imstande wäre, das Spielbedürfnis eines Kindes anzusprechen.

Die US 5,330,210 wiederum beschreibt einen Einkaufswagen mit einer in einer Aufnahmeeinrichtung befindlichen Sitzeinrichtung für ein Kind. Die Aufnahmeeinrichtung ist als kleines Auto gestaltet, in dem ein Kind Platz nehmen kann. Wie der Einkaufswagen gemäß der US 4,805,935, so ist auch der hier genannte Einkaufswagen als gattungsfremd einzustufen, da sich seine Sitzeinrichtung nicht vor, sondern unter dem Korb befindet.

Es zeigen
- Fig. 1 bis Fig. 4: jeweils zwei ineinandergeschobene Einkaufswagen mit unterschiedlich gestalteten Aufnahmeeinrichtungen;
- Fig. 5: einen Einkaufswagen mit einem Sicherungsmittel zum Schutz eines in der Aufnahmeeinrichtung befindlichen Kindes.

Die nachfolgende Beschreibung stützt sich auf die prioritätsbegründenden Schutzrechte dieser Anmeldung. Nicht erfindungswesentliche technische Merkmale, die in der folgenden Beschreibung fehlen, können deshalb zum besseren Verständnis diesen Schutzrechten entnommen werden. Alle nachfolgend beschriebenen Einkaufswagen 1, 1' orientieren sich, mit Ausnahme der Aufnahmeeinrichtungen 16, mehr oder weniger an bekannten Einkaufswagen 1, 1'. So weisen alle Einkaufswagen 1, 1' ein bevorzugt konisches, üblicherweise hinten offenes Fahrgestell 22 auf, das an den Längsseiten 7 mit Stützen 6 ausgestattet ist, die einen gewöhnlich konischen Korb 9 tragen, der im hinteren Bereich 14 des Einkaufswagens 1, 1' angeordnet ist. Eine Schiebeeinrichtung 8 erlaubt das Schieben und Ziehen des Einkaufswagens 1, 1'. Der Korb 9 kann in bekannter Weise mit einer Kindersitzeinrichtung 10 für ein Kleinkind ausgestattet sein. Derart gestaltete Einkaufswagen sind so gebaut, dass sie sich, ohne z.B. eine Aufnahmeeinrichtung 16 für ein weiteres Kind aufzuweisen, in bekannter Weise platzsparend ineinanderschieben lassen.

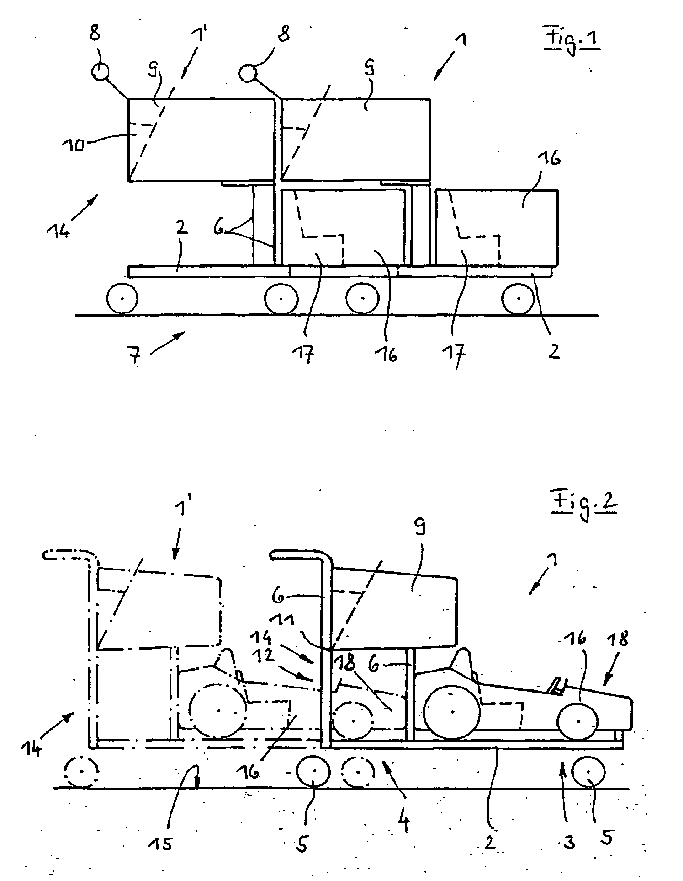

Fig. 1 zeigt in schematischer Weise zwei gleiche Einkaufswagen 1, 1' wobei der links dargestellte Einkaufswagen 1' in einen rechts dargestellten vorausbefindlichen Einkaufswagen 1 platzsparend eingeschoben ist. Vor dem Korb 9 eines jeden Einkaufswagens 1, 1' ist eine mit einer Sitzeinrichtung 17 ausgestattete Aufnahmeeinrichtung 16 für ein Kind vorgesehen und am Fahrgestell 2 befestigt. Jede Aufnahmeeinrichtung 16 ist so gestaltet, dass sich in ineinandergeschobenem Zustand zweier Einkaufswagen 1, 1' die Aufnahmeeinrichtung 16 des eingeschobenen Einkaufswagens 1' komplett unterhalb des Korbes 9 des vorausbefindlichen Einkaufswagens 1 befindet. Während beim hier vorliegenden Ausführungsbeispiel die Aufnahmeeinrichtungen 16 schematisch nur als kubisch gestaltete Gegenstände dargestellt sind. lassen die nachfolgenden Ausführungsbeispiele erkennnen, dass die Aufnahmeeinrichtungen 16 bevorzugt als auf das Spielbedürfnis von Kindern abzielende Gegenstände gestaltet sind.

Die gleich gestalteten Einkaufswagen 1, 1' entsprechend Fig. 2 schließen unterhalb des Korbes 9 nach hinten mit einer Öffnung 12 ab, die im Beispiel durch die hintere Unterkante 11 des Korbes 9. durch die Stützen 6 und durch den Fußboden 15 umrissen ist. Bei den Aufnahmeeinrichtungen 16 ist zumindest der vordere Bereich 18 schmäler und niedriger gestaltet als die im hinteren Bereich 14 des Einkaufswagens 1. 1' befindliche Öffnung 12. Aus der Zeichnung wird diese konstruktive Maßnahme deutlich, denn die Aufnahmeeinrichtung 16 des eingeschobenen. links dargestellten Einkaufswagens 1 ist in die Öffnung 12 des vorausbefindlichen Einkaufswagens 1 zumindest so weit eingeschoben, dass sich die Aufnahmeeinrichtung 16 des eingeschobenen Einkaufswagens 1' mit ihrem vorderen Bereich 18 unter dem Korb 9 des vorausbefindlichen Einkaufswagens 1 befindet. Der vordere Bereich 3 des konischen. mit Fahrrollen 5 ausgestatteten Fahrgestelles 2 ist dabei schmäler ausgebildet als der hintere Bereich 4.

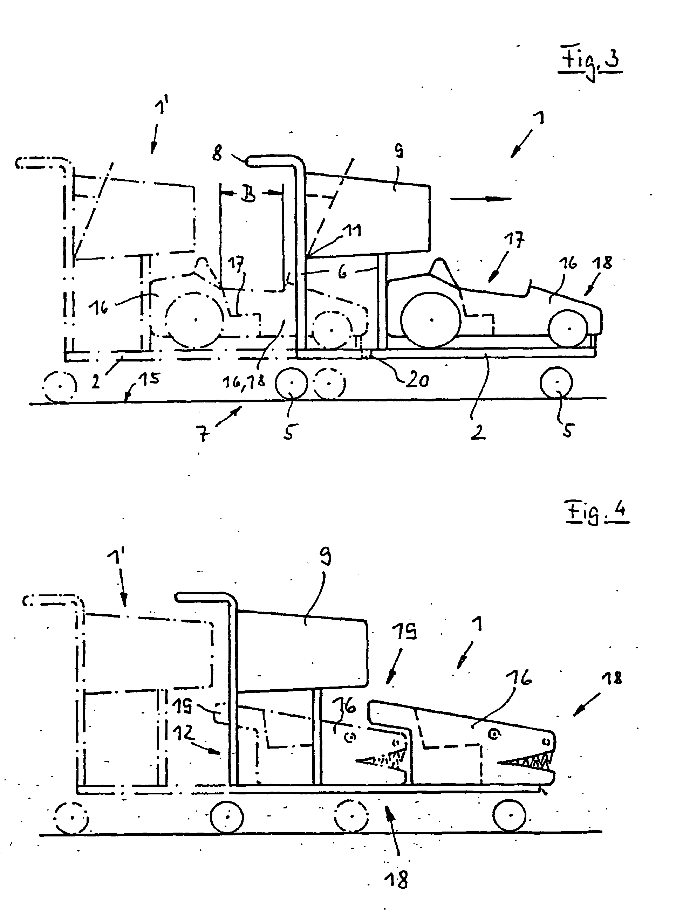

Bei den in Fig. 3 dargestellten. Einkaufswagen 1, 1' sind diese sowie die Aufnahmeeinrichtungen 16 so gestaltet. dass in ineinandergeschobenem Zustand der beiden gleichen Einkaufswagen 1, 1' und in Schieberichtung (Pfeil) der Einkaufswagen 1, 1' betrachtet. die Sitzeinrichtung 17 (siehe auch Maß B) der Aufnahmeeinrichtung 16 des eingeschobenen Einkaufswagens 1' vor dem Korb 9 des vorausbefindlichen Einkaufswagens 1 endet. Diese Maßnahme kann der Sicherheit eines Kindes dienen. welches sich in der Aufnahmeeinrichtung 16 eines einzuschiebenden Einkaufswagens 1' befindet. Diese Sicherheit kann z.B. dadurch erreicht werden. dass das Fahrgestell 2 eines jeden Einkaufswagens 1, 1' eine die Längsseiten 7 des Fahrgestelles 2 verbindende Querstrebe 20 aufweist. die als Anschlag für das Fahrgestell 2 eines einzuschiebenden Einkaufswagens 1' vorgesehen ist. Figure 1 bis 3 zeigen nicht unter Anspruch 1 fallende Einkaufswagen.

Bei den in Fig. 4 dargestellten, ineinandergeschobenen Einkaufswagen 1, 1' ist der hintere Bereich 19 der Aufnahmeeinrichtungen 16 nach oben abgesetzt, so dass in ineinandergeschobenem Zustand zweier gleicher Einkaufswagen I, 1' der vordere Bereich 18 der Aufnahmeeinrichtung 16 eines eingeschobenen Einkaufswagens 1' unterhalb des hinteren Bereiches 19 der Aufnahmeeinrichtung 16 des vorausbefindlichen Einkaufswagens 1 angeordnet ist. Allgemein ist an dieser Stelle anzufügen. dass der vordere und der hintere Bereich 18. 19 einer jeden Aufnahmeeinrichtung 16 so gestaltet werden kann, dass jede Aufnahmeeinrichtung 16 mit einer zweiten gleichen Aufnahmeeinrichtung 16. in horizontaler Richtung bewegt, platzsparend so ineinanderfügbar ist, dass zumindst ein Teil des vorderen Bereiches 18 der zweiten Aufnahmeeinrichtung 16 vom hinteren Bereich 19 der ersten Aufnahmeeinrichtung 16 aufgenommen ist.

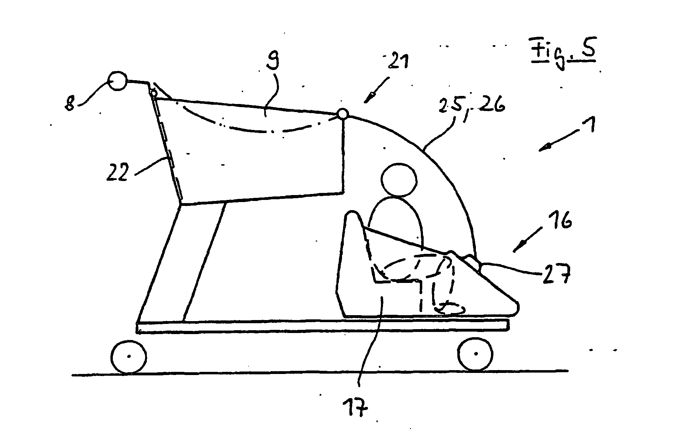

Fig. 5 zeigt einen Einkaufswagen 1, bei dem den Ineinanderschiebevorgang hindernde Mittel 25 vorgesehen sind. die in eine den Ineinanderschiebevorgang ermöglichende Lage und wieder zurück in die Ausgangslage bewegbar sind. Um dies zu ermöglichen. ist das eine Sperrfunktion ausübende Mittel 25 in Form eines aus wenigstens einem Stab bestehenden Bügels 26 vorgesehen. Der Bügel 26 ist am vorderen Rand 21 des Korbes 9 um eine horizontale Achse verschwenkbar gelagert. Die Zeichnung zeigt den Bügel 26 in jener Lage, die ein Einschieben des Einkaufswagens 1 in einen weiteren gleichen Einkaufswagen 1 oder 1' hindert. Der Bügel 26 überspannt dabei bogenförmig und teilweise die vor dem Korb 9 befindliche Aufnahmeeinrichtung 16. in der ein Kind auf der Sitzeinrichtung 17 Platz genommen hat. Das in Schieberichtung des Einkaufswagens 1 betrachtet vordere Ende des Bügels 26 ist in einem an der Aufnahmeeinrichtung 16 angeordneten Schließmechanismus 27 eingerastet. Die Schließwirkung kann von Hand aufgehoben werden. Soll der Einkaufswagen 1 in einen vorausbefindlichen Einkaufswagen 1 oder 1' eingeschoben werden. muss zuerst der Schließmechanismus 27 gelöst und der Bügel 26 nach hinten in Richtung Schiebeeinrichtung 8 geschwenkt werden. wo er im oberen Bereich des Korbes 9 umgekehrt angeordnet zu liegen kommt. Die Form des Bügels 26 ist so gewählt, dass in der eben beschriebenen Nichtfunktionslage des Bügels 26, siehe strichpunktierte Darstellung, trotzdem ein weiterer Einkaufswagen 1' in den Einkaufswagen 1 platzsparend eingeschoben werden kann. Wird beim Einschiebevorgang die in bevorzugter Weise als schwenkbare Klappe gestaltete Rückwand 22 des Korbes 9 eines vorausbefindlichen Einkaufswagens 1 angehoben, kann die Rückwand 22 auch den zurückgeschwenkten, im Korb 9 befindlichen Bügel 26 dieses Einkaufswagens 1 anheben. so dass der Bügel 26 sich nicht als Hindernis beim Stapelvorgang erweist. Da der Bügel 26 in der Nichtfunktionslage das Beladen des Korbes 9 mit Ware behindert. muss. um einkaufen zu können. der Bügel 26 wieder nach vorne in seine Funktionslage geschwenkt und mit dem Schließmechanismus 27 verrastet werden. So nimmt der Bügel 26 wieder jene Lage ein, die ein Ineinanderschieben der Einkaufswagen 1, 1' ausschließt. Der Bügel 26 kann zu einer dachartigen Abdeckung weiterentwikkelt sein, die sich als Dach über ein in der Aufnahmeeinrichtung 16 sitzendes Kind erstreckt. Das Mittel 25, unabhängig davon, ob als Bügel 26 oder als Dach gestaltet, kann auch ausschließlich an der Aufnahmeeinrichtung 16 und/oder am Fahrgestell 2 angeordnet sein. Figure 5 zeigt einen nicht unter Auspruch 1 fallenden Einkaufswagen.

Es ist möglich. und wie aus der Anordnung der Warenablage 23 ersichtlich. das vordere Ende einer jeden Aufnahmeeinrichtung 16 um eine quer zur Längsrichtung des Einkaufswagens 1, 1' verlaufende Achse begrenzt verschwenkbar zu lagern und die Aufnahmeeinrichtung 16 beispielsweise mit dem hinteren Ende am Fahrgestell 2 lose abzustützen. Die Aufnahmeeinrichtungen 16 sind dabei so gestaltet, dass beim Ineinanderschieben zweier Einkaufswagen 1, 1' die Aufnahmeeinrichtung 16 des einzuschiebenden Einkaufswagens 1', mit oder ohne Unterstützung des vorderen Endes des Fahrgestelles 2. die Aufnahmeeinrichtung 16 _des vorausbefindlichen Einkaufswagens 1 ein Stück weit unterfährt und dann nach oben drückt. Diese Aufnahmeeinrichtung 16 nimmt dann eine schräge, nach vorne abfallende Lage ein, während zumindest der vordere Bereich 18 der Aufnahmeeinrichtung 16 des eingeschobenen Einkaufswagens 1' unter dem Korb 9 des vorausbefindlichen Einkaufswagens 1 angeordnet ist.

Umgekehrt ist es möglich. das hintere Ende einer jeden Aufnahmeeinrichtung 16 um eine quer zur Längsrichtung des Einkaufswagens 1, 1' verlaufende Achse begrenzt verschwenkbar zu lagern und dafür das vordere Ende der Aufnahmeeinrichtung 16 am Fahrgestell 2 lose abzustützen. Am hinteren Bereich 4 des Fahrgestelles 2 der so gestalteten Einkaufswagen 1, 1' ist dabei eine Querstrebe vorgesehen. die in bekannter Weise so angeordnet ist. dass sie den Ineinanderschiebevorgang zweier Einkaufswagen 1, 1' nicht behindert. Wird nun ein rückwärtiger Einkaufswagen 1' in einen vorausbefindlichen Einkaufswagen 1 eingeschoben. so gleitet die Aufnahmeeinrichtung 16 des rückwärtigen Einkaufswagens 1' an der Querstrebe des vorausbefindlichen Einkaufswagens 1 auf und nimmt nach Beendigung des Einschiebevorganges eine in Schieberichtung des Einkaufswagens 1, 1' ansteigende Lage ein. Dabei befindet sich zumindest der vordere Bereich 18 der Aufnahmeeinrichtung 16 des eingeschobenen Einkaufswagens 1' unter dem Korb 9 des vorausbefindlichen Einkaufswagens 1.

Betrachtet man einen Stapel mehrerer ineinandergeschobener Einkaufswagen 1, 1', die entsprechend den eben geschilderten Vorschlägen gestaltet sind, so erkennt man. dass mit einer Ausnahme alle übrigen Aufnahmeeinrichtungen 16 der ineinandergeschobenen Einkaufswagen 1. 1' schräg angeordnet geschichtet sind. Beim ersten Ausführungsbeispiel verbleibt die Aufnahmeeinrichtung 16 des zuletzt eingeschobenen Einkaufswagens 1' in der Gebrauchslage während beim zweiten Ausführungsbeispiel dies auf den ersten oder zuvorderst befindlichen Einkaufswagen 1 des Stapels zutrifft.

## Patentansprüche

1. Einkaufswagen (1, 1') mit einem Fahrgestell (2), mit einer Schiebeeinrichtung (8) und mit einem Korb (9), der auf Stützen (6) ruht, die an den Längsseiten (7) des Einkaufswagens gelegen nach oben gerichtet sind, sowie mit einer vor dem Korb (9) angeordneten, für ein Kind bestimmten Sitzeinrichtung (17), die in eine das Spielbedürfnis des Kindes ansprechende Aufnahmeeinrichtung (16) eingebunden ist, wobei der Einkaufswagen (1,1') nach hinten eine Öffnung (12) aufweist, die sich zwischen dem Korb (9), dem Fußboden (15) und den Stützen (6) befindet, **gekennzeichnet durch** folgende Merkmale:
- der vordere Bereich (3) des Fahrgestelles (2) ist schmäler ausgebildet als dessen hinterer Bereich (4);
- zumindest der vordere Bereich (18) der Aufnahmeeinrichtung (16) ist schmäler und niedriger gestaltet als die Öffnung (12);
- zumindest der vordere Bereich (18) der Aufnahmeeinrichtung (16) ist in die Öffnung (12) eines vorausbefindlichen Einkaufswagens (1, 1') einfügbar und
- in eingefügtem Zustand befindet sich der vordere Bereich (18) der Aufnahmeeinrichtung (16) unterhalb des Korbes (9) des vorausbefmdlichen Einkaufswagens (1'), wobei der vordere und der hintere Bereich (18, 19) der Aufnahmeeinrichtung (16) so gestaltet sind, dass die Aufnahmeeinrichtung (16) mit einer zweiten gleichen Aufnahmeeinrichtung (16) in horizontaler Richtung platzsparend so ineinanderfügbar ist, dass zumindest ein Teil des vorderen Bereiches (18) der zweiten Aufnahmeeinrichtung (16) vom hinteren Bereich (19) der ersten Aufnahmeeinrichtung (16) entweder aufgenommen oder unter diesem angeordnet ist.

2. Einkaufswagen nach Anspruch 1, **dadurch gekennzeichnet, dass** sich in ineinandergeschobenem Zustand zweier Einkaufswagen (1, 1') und in Schieberichtung der Einkaufswagen (1, 1') betrachtet, der Korb (9) des vorausbefindlichen Einkaufswagens (1') vor der Sitzeinrichtung (10) des rückwärtig eingeschobenen Einkaufswagens (1 oder 1') befindet.

3. Einkaufswagen nach einem der Ansprüche 1 bis 2, **dadurch gekennzeichnet, dass** den Ineinanderschiebevorgang zweier Einkaufswagen (1, 1') hindernde Mittel (25) vorgesehen sind, die in eine den Ineinanderschiebevorgang ermöglichende Lage und wieder zurück in die Ausgangslage bewegbar sind.

4. Einkaufswagen nach Anspruch 3, **dadurch gekennzeichnet, dass** die Mittel (25) durch einen am Korb (9) schwenkbar befestigten Bügel (26) und einen an der Aufnahmeeinrichtung (16) befindlichen, zum Einrasten des Bügels (26) bestimmten Schließmechanismus (27) gebildet sind.

5. Einkaufswagen nach Anspruch 4, **dadurch gekennzeichnet, dass** der Bügel (26) zu einem Dach weiterentwickelt ist.

6. Einkaufswagen nach einem der Ansprüche 1 bis 5, **dadurch gekennzeichnet, dass** die Aufnahmeeinrichtung (16) um eine horizontale, quer verlaufende Achse begrenzt verschwenk- oder anhebbar gelagert ist.

## Claims

1. A shopping trolley (1, 1') having a chassis (2), having a pushing device (8) and having a basket (9) resting on supports (6) which are positioned on the longitudinal sides (7) of the shopping trolley and are directed upwards, and also having a seat device (17) intended for a child, which is arranged in front of the basket (9) and is incorporated in a receiving device (16) which satisfies the child's desire to play, the shopping trolley (1, 1') having an opening (12) at the rear, which is located between the basket (9), the floor (15) and the supports (6), **characterised by** the following features:
- The front region (3) of the chassis (2) is of a narrower construction than its rear region (4);
- At least the front region (18) of the receiving device (16) is designed to be narrower and lower than the opening (12);
- At least the front region (18) of the receiving device (16) may be inserted into the opening (12) of a shopping trolley (1, 1') which is located in front of it; and
- In the inserted condition, the front region (18) of the receiving device (16) is located below the basket (9) of the shopping trolley (1') in front, the front and the rear region (18, 19) of the receiving device (16) being designed such that the receiving device (16) and a second similar receiving device (16) may be inserted into one another in such a way that at least part of the front region (18) of the second receiving device (16) is either received by the rear region (19) of the first receiving device (16) or is arranged below this rear region, thus saving space in the horizontal direction.

2. A shopping trolley according to Claim 1, **characterised in that**, in the condition in which two shopping trolleys (1, 1') are pushed inside one another and as seen in the pushing direction of the shopping trolleys (1, 1'), the basket (9) of the shopping trolley (1') in front is located in front of the seat device (10) of the shopping trolley (1 or 1') pushed in from behind.

3. A shopping trolley according to one of Claims 1 to 2, **characterised in that** means (25) obstructing the procedure of pushing two shopping trolleys (1, 1') inside one another are provided, which may be moved into a position enabling the pushing-in procedure and back into the starting position again.

4. A shopping trolley according to Claim 3, **characterised in that** the means (25) are formed by a bow-shaped part (26) which is pivotably fixed to the basket (9) and a locking mechanism (27) which is located on the receiving device (16) and is intended for latching-in the bow-shaped part (26).

5. A shopping trolley according to Claim 4, **characterised in that** the bow-shaped part (26) is further developed into a roof.

6. A shopping trolley according to one of Claims 1 to 5, **characterised in that** the receiving device (16) is mounted such that it may be pivoted or raised to a limited extent about a transversely-extending horizontal axis.

## Revendications

1. Chariot à provisions (1, 1') comprenant un chassis de roulement (2), un dispositif de poussée (8) et un panier (9) reposant sur des montants de soutien (6) dirigés vers le haut et implantés sur les côtés longitudinaux (7) dudit chariot à provisions, ainsi qu'un système d'assise (17) qui est destiné à un enfant, est disposé devant le panier (9) et est intégré dans un réceptacle (16) répondant aux propensions ludiques de l'enfant, ledit chariot à provisions (1, 1') comportant, vers l'arrière, une ouverture (12) interposée entre le panier (9), le plancher (15) et les montants de soutien (6), **caractérisé par** les particularités suivantes::
- La région antérieure (3) du châssis de roulement (2) est réalisée plus étroite que la région postérieure (4) de ce dernier;
- Au moins la région antérieure (18) du réceptacle (16) est d'une configuration plus étroite et plus basse que celle de l'ouverture (12);
- Au moins la région antérieure (18) du réceptacle (16) peut être insérée dans l'ouverture (12) d'un chariot à provisions (1, 1') précédant; et
- À l'état inséré, la région antérieure (18) dudit réceptacle (16) est située au-dessous du panier (9) du chariot à provisions (1') précédent, les régions antérieure et postérieure (18, 19) du réceptacle (16) étant configurées de façon telle que ledit réceptacle (16) puisse être imbriqué dans un second réceptacle (16) identique, avec faible encombrement dans la direction horizontale, de manière qu'au moins une partie de la région antérieure (18) du second réceptacle (16) soit reçue par la région postérieure (19) dudit premier réceptacle (16), ou soit disposée au-dessous de celle-ci..

2. Chariot à provisions selon la revendication 1, **caractérisé par le fait que**, à l'ètat d'imbrication mutuelle de deux chariots à provisions (1, 1') et en observant dans la direction du coulissement desdits chariots à provisions (1, 1'), le panier (9) du chariot à provisions (1') précédent se trouve devant le système d'assise (10) du chariot à provisions (1 ou 1') inséré à l'arrière.

3. Chariot à provisions selon l'une des revendications 1 à 2, **caractérisé par** la présence de moyens (25) qui entravent le processus d'imbrication mutuelle de deux chariots à provisons (1, 1') et peuvent être déplacés vers une position permettant le processus d'imbrication mutuelle, puis ramenés à la position de départ.

4. Chariot à provisions selon la revendication 3, **caractérisé par le fait que** les moyens (25) sont formés d'un étrier (26) fixé au panier (9) avec faculté de pivotement, et d'un mécanisme de fermeture (27) situé sur le receptacle (16) et destiné à l'encliquetage dudit étrier (26).

5. Chariot à provisions selon la revendication 4, **caractérisé par le fait que** l'étrier (26) est perfectionné pour former une toiture.

6. Chariot à provisions selon l'une des revendications 1 à 5, **caractérisé par le fait que** le réceptacle (16) est monté à pivotements ou à soulèvements limités autour d'un axe horizontal s'étendant transversalement.
